# DEMANDE DE BREVET EUROPEEN

(11) **EP 1 132 838 A1**
(43) Date de publication de la demande: **12.09.2001**
(21) Numéro de dépôt: 00810189.1
(22) Date de dépôt: 07.03.2000
(51) Int. Cl.: G06F 17/60

(54) **Système pour la gestion d'objets**

(71) Demandeur: RSC technologies SARL, 1615 Bossonnens (CH)
(72) Inventeur: Rime, Cédric-Gaya, 1615 Bossonnens (CH); Graham, James-Hamish, 1720 Corminboeuf (CH); Bessire, Pascale, 1675 Vauderens (CH)
(74) Mandataire: Gresset, Jean

(57) **Abrégé**

L'invention concerne un système destiné à la gestion de la commande d'objets, comportant un serveur (10) doté d'une mémoire (12) dans laquelle peuvent être enregistrés des ordres, transmis par un réseau Internet ou Intranet, relatifs au traitement de la commande, et un ensemble de postes de travail (16 à 40) équipés chacun d'un ordinateur relié au serveur et affectés à l'exécution d'une opération en rapport avec au moins l'un des objets à gérer.

La mémoire (12) dispose, pour chaque objet, de la liste des postes impliqués et, pour chaque poste, de la liste des tâches opérationnelles et relationnelles à effectuer. Pour chaque commande, le serveur (10) adresse aux postes concernés les ordres relatifs aux tâches à accomplir. L'ensemble des tâches relationnelles convergent vers le poste de travail (38) chargé de la dernière des tâches à effectuer.

## Description

La présente invention se rapporte aux systèmes destinés à la gestion d'objets et, plus particulièrement, à la gestion de commandes d'objets. Par convention, le mot objet est utilisé ici pour désigner aussi bien des produits que des services.

De tels systèmes sont particulièrement utiles pour la gestion de commandes adressées par un client à un fournisseur au travers d'un réseau Intranet ou Internet. Ils comportent généralement:
- un ordinateur d'entrée doté d'une mémoire dans laquelle peuvent être enregistrés des ordres relatifs au traitement de la commande, et
- un ensemble de postes de travail équipés chacun d'un ordinateur relié à l'ordinateur d'entrée et affectés à l'exécution d'une opération en rapport avec au moins l'un des objets à gérer, les ordinateurs des différents postes de travail étant connectés pour former un réseau informatique.

Dans les systèmes connus de ce type, l'ordinateur d'entrée adresse une commande à un premier poste qui l'exécute et transmet à un poste suivant l'objet en cours de traitement ainsi que la suite des actions à entreprendre. La personne commandant le deuxième poste effectue les opérations idoines puis transmet l'objet, avec les informations nécessaires, au poste suivant. La procédure se poursuit donc de manière séquentielle.

Avec une telle procédure, la gestion d'un ensemble important d'objets devient vite complexe, voire irréalisable. Aussi, est-il fait appel à des ensembles travaillant en parallèle, ce qui peut conduire à des livraisons et des facturations séparées, pour des objets commandés simultanément. Il en résulte nécessairement une augmentation des coûts et une réduction de la souplesse d'utilisation des moyens industriels disponibles.

Le but de la présente invention est de pallier ces inconvénients.

Ce but est atteint grâce au fait que:
- la mémoire de l'ordinateur d'entrée dispose, pour chaque objet, de la liste des postes devant participer au traitement de la commande et, pour chaque poste, de la liste des tâches opérationnelles et relationnelles à effectuer ainsi que des conditions d'exécution ou non exécution de ces tâches,
- l'ordinateur d'entrée est agencé de manière à ce qu'à chaque commande, il adresse aux postes concernés les ordres relatifs aux tâches à accomplir, et
- l'ensemble des tâches relationnelles convergent, au moins médiatement, vers le poste de travail chargé de la dernière des tâches à effectuer.

De la sorte, lorsqu'une commande arrive à l'ordinateur d'entrée, ce dernier envoie à tous les postes concernés les ordres nécessaires pour la réalisation des tâches qu'implique l'exécution de la commande. L'ordinateur de chaque poste reçoit ainsi l'information concernant une tâche à exécuter sur un objet donné et en un temps donné, l'objet en question devant, ensuite, être acheminé à un poste suivant.

Quelles que soient les mesures prises, il se peut qu'une situation imprévisible se présente, par exemple un dépassement de capacité des moyens de production ou une rupture de stocks. Pour gérer de telles situations, le système selon l'invention peut, avantageusement, comporter au moins un poste de secours vers lequel convergent les informations lorsqu'un ordre ne peut être exécuté comme prévu, et agencé de manière à ce qu'un opérateur puisse y introduire des ordres et des informations complémentaires permettant de gérer cette situation, malgré le problème rencontré.

Selon les postes existants, il se peut que la même tâche puisse être exécutée par plusieurs postes. Aussi, afin de tirer le meilleur profit des moyens existants, la mémoire de l'ordinateur d'entrée dispose de plusieurs listes alternatives pour une partie, au moins, des objets traités.

D'autres avantages et caractéristiques de l'invention ressortiront de la description qui va suivre, faite en regard du dessin annexé, dans lequel :
- la figure 1 représente, de manière schématique, un système selon l'invention, et
- les figures 2 et 3 montrent les schémas des tâches mis en mémoire dans l'ordinateur d'entrée.

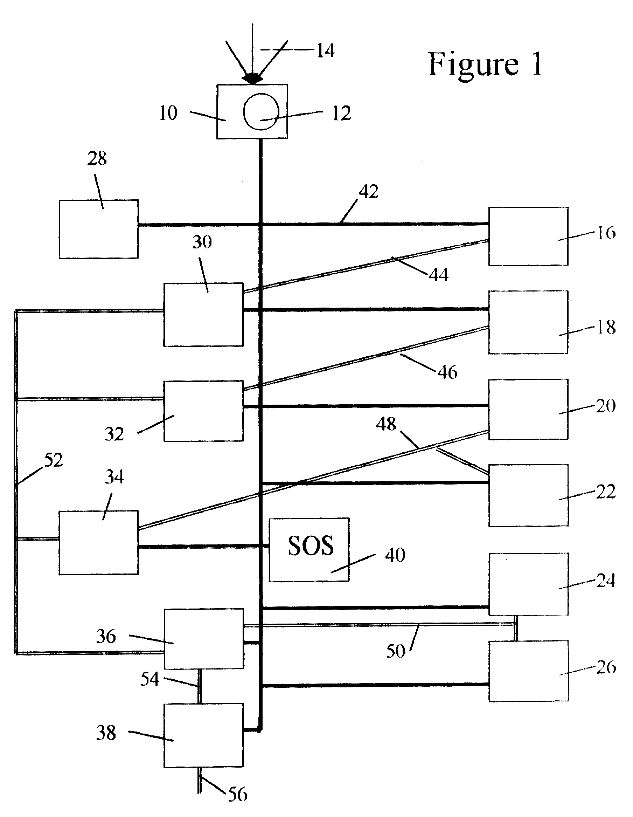

Sur la figure 1, on a représenté schématiquement un système selon l'invention, adapté à gérer des commandes de disques compacts et de cassettes dans lesquels la musique enregistrée est choisie parmi un ensemble de morceaux mis en mémoire. Ce dispositif n'a qu'une valeur d'exemple. Il a été choisi seulement pour permettre une explication complète de l'invention sans, pour autant, surcharger le dessin et la description.

Le système représenté comporte un ordinateur d'entrée ou serveur 10 doté d'une mémoire 12 et relié à un réseau informatique 14, par exemple à Internet, qui lui adresse des commandes.

Le système comporte des stocks de disques compacts 16 et de cassettes 18 vierges, de notices 20 et 22 et de boîtes 24 et 26, respectivement pour disques compacts et pour cassettes. Les morceaux de musique sont stockés, sous forme numérique, dans une mémoire 28. Tous ces éléments constituent des postes de travail pour le système.

L'exécution de la commande reçue par le serveur 10 passe par la gravure d'un disque compact, au poste de travail 30, ou par l'enregistrement d'une cassette, au poste 32, à partir des données fournies par la mémoire 28, par l'impression d'une notice, au poste 34, puis par le chargement d'une boîte, au poste 36, avec le disque compact ou la cassette et la notice. Le poste de travail 38 assure ensuite la facturation et l'envoi de la commande. Enfin, le poste 40 a une fonction de secours, comme cela sera expliqué plus loin.

Chacun des postes de travail précités comprend un ordinateur relié à l'ordinateur d'entrée 10 par un bus 42, l'ensemble formant ainsi un réseau informatique.

Le transport des objets peut être réalisé par n'importe quels moyens connus, par exemple un tapis roulant ou un chariot guidé. Sur la figure 1, les moyens de transport sont représentés par des traits doubles. Ils assurent les liaisons suivantes :

| **Référence** | **Point de départ** | **Point d'arrivée** |
|---|---|---|
| 44 | Stock disques compacts 16 | Gravure disques compacts 30 |
| 46 | Stock cassettes 18 | Enregistrement cassettes 32 |
| 48 | Stocks notices pour disques 20 et pour cassettes 22 | Impression notices 34 |
| 50 | Stocks boîtes pour disques 24 et pour cassettes 26 | Chargement des boîtes 36 |
| 52 | Gravure disques compacts 30, enregistrement cassettes 32 et impression notices 34 | Chargement des boîtes 36 |
| 54 | Chargement des boîtes 36 | Facturation et expédition 38 |
| 56 | Facturation et expédition 38 | Client |

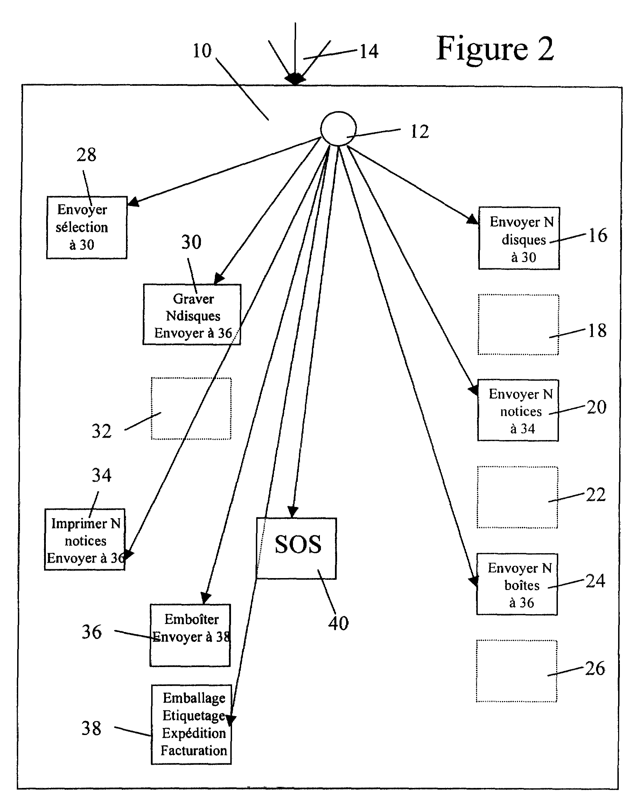

La mémoire 12 du serveur dispose, pour chaque objet à traiter, de la liste de chacun des postes de travail participant à l'évolution de l'objet et, pour chacun de ces postes, de la liste des tâches opérationnelles et relationnelles à effectuer ainsi que des conditions d'exécution ou non exécution de ces tâches. La figure 2 permet de comprendre en quoi cela consiste, avec l'exemple d'une commande de disques compacts.

Dans cet exemple, l'ordinateur d'entrée 10 reçoit commande de N disques compacts sur lesquels doivent figurer un certain nombre de morceaux, choisis dans une liste et disponibles, sous forme numérique, dans la mémoire 28.

A la réception de l'ordre, l'ordinateur d'entrée 10 détermine le matériel nécessaire pour satisfaire la commande. Il définit combien de disques doivent être utilisés pour graver l'ensemble des morceaux demandés et, s'il y en a plusieurs, la manière dont les morceaux sont répartis. Il donne aussi un numéro de code à la commande reçue, qui est associée à tous les objets ou portions d'objets, matériels ou virtuels, impliqués au cours de la procédure.

L'ordinateur 10 va aussi chercher, dans sa mémoire 12, les informations concernant la procédure d'exécution de l'ordre. On notera que, sur la figure 2, les postes non impliqués ont été maintenus, mais représentés en pointillé. L'ordinateur introduit ensuite, dans ces informations, les données provenant de la commande et préalablement traitées.

De la sorte, l'ordinateur d'entrée 10 prépare les ordres devant être adressés à chacun des postes de travail impliqués. Ces ordres sont ensuite envoyés aux ordinateurs des différents postes, en vue de leur exécution. Bien que cela ne soit pas explicitement représenté, il va de soi que la liste des tâches adressée à chaque poste comporte une planification dans le temps, de manière à ce que chaque élément de la commande soit disponible au bon moment et au bon endroit.

Si l'on examine de manière plus détaillée le schéma de la figure 2, on constate que le serveur 10 prépare les ordres de sorte que les différents postes effectuent leurs tâches de la manière décrite ci-dessous.

Le poste 16 envoie N disques au poste de gravure 30. L'ordinateur 28, qui conserve en mémoire l'ensemble des morceaux de musique, adresse au poste 30 ceux qui ont été choisis. Les informations reçues sont transformées en impulsions commandant la gravure des disques qui sont ensuite envoyés au poste 36.

Parallèlement, le poste 20 envoie N notices au poste 34. Les notices sont alors imprimées avec les indications relatives au contenu des disques commandés puis envoyées au poste 36.

De son côté, le poste 24 envoie N boîtes au poste 36.

La planification de ces différentes opérations est coordonnée de manière à ce que les disques et les notices arrivent en même temps que les boîtes au poste 36, afin d'éviter des stocks intermédiaires.

L'opération suivante, réalisée par le poste 36, est la mise en boîte des notices et des disques, suivie de leur transfert au poste d'expédition 38 qui effectue alors l'emballage, l'étiquetage, la facturation et l'acheminement vers un réseau de distribution.

Si, pour une raison ou une autre, un ordre ne peut pas être exécuté comme programmé, le poste de travail qui se trouve en difficulté s'adresse automatiquement au poste SOS 40 qui comporte également un ordinateur, lequel est programmé pour réagir à l'appel, soit en donnant des ordres complémentaires, soit en faisant intervenir une personne habilitée de prendre des décisions.

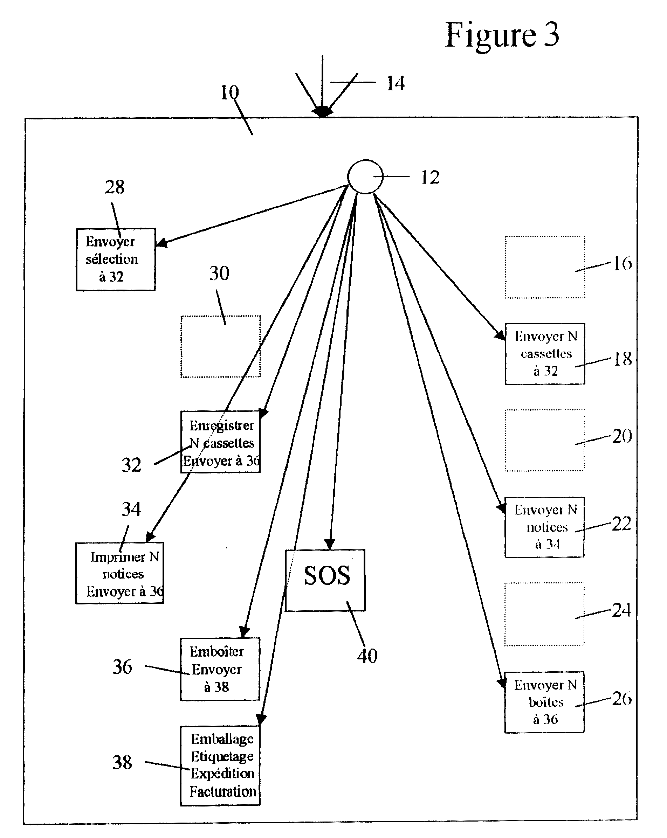

La figure 3 représente l'ensemble des informations que fait intervenir l'ordinateur 10 lorsqu'il reçoit un ordre relatif à des cassettes. Dans ce cas comme dans l'autre, seuls certains postes sont mis à contribution. L'ordinateur 10 établit donc la liste de ces postes et les tâches qui leur incombent. Il complète les informations sur la base de la commande reçue puis adresse les ordres aux différents postes, comme indiqué.

La séquence de réalisation de cassettes étant tout à fait comparable à celle de la réalisation d'un disque, elle ne sera pas décrite de manière plus détaillée.

On relèvera que certains postes sont mis à contribution pour les deux types de commandes (disques et cassettes), d'autres pour l'un uniquement. Cela signifie que le taux d'occupation des différents postes peut considérablement varier. C'est pourquoi, du fait que l'ordinateur 10 peut suivre, au travers du réseau, le déroulement des tâches, il lui est possible d'utiliser au mieux l'ensemble des ressources disponibles.

Aussi bien dans l'exemple de la figure 2 que dans celui de la figure 3, l'ensemble des tâches converge, au moins médiatement, vers le poste 38 qui, dans le réseau, est affecté à l'exécution de la dernière des tâches.

Comme, dans le système selon l'invention, tous les ordres sont adressés par l'ordinateur 10, qui est en permanence relié aux différents postes par le bus 42, cet ordinateur peut prendre en compte les tâches en cours pour assurer une planification optimale.

Toutes les tâches n'ont, de loin, pas la même durée. Aussi est-il possible de prévoir plusieurs postes de travail pour effectuer la même tâche. Dans ce cas, l'ordinateur 10 dispose de plusieurs listes alternatives, permettant de choisir la solution la plus rapide ou la moins coûteuse.

Comme expliqué plus haut, chaque fois qu'un objet doit subir une suite d'opérations, l'ordinateur 10 assure la mise en route du processus et l'ordinateur du poste 38 le finalise, l'ordinateur du poste 40 intervenant en cas de panne pour assurer la sécurité du système et une réaction rapide en cas de problème.

L'exemple donné a été choisi pour sa simplicité. Il va de soi que le système selon l'invention peut être appliqué à de nombreux domaines et pour le traitement d'un grand nombre d'objets différents. Il peut aussi être utilisé pour la gestion d'objets virtuels, tels que des programmes d'ordinateurs, envoyés sur des supports tels que des disquettes ou des CD ROM, ou encore par l'intermédiaire du réseau 14.

On notera enfin qu'il est particulièrement avantageux de confier au serveur 10 la fonction d'assurer la traçabilité des opérations effectuées par le système.

## Revendications

1. Système destiné à la gestion de la commande d'objets, comportant:
- un ordinateur d'entrée (10) doté d'une mémoire (12) dans laquelle peuvent être enregistrés des ordres relatifs au traitement de la commande, et
- un ensemble de postes de travail (16 à 40) équipés chacun d'un ordinateur relié à l'ordinateur d'entrée et affectés à l'exécution d'une opération en rapport avec au moins l'un des objets à gérer, les ordinateurs desdits postes de travail étant connectés pour former un réseau informatique,
**caractérisé en ce que**:
- ladite mémoire (12) dispose, pour chaque objet, de la liste des postes devant participer au traitement de la commande et, pour chaque poste, de la liste des tâches opérationnelles et relationnelles à effectuer ainsi que des conditions d'exécution ou non exécution de ces tâches,
- ledit ordinateur d'entrée (10) est agencé de manière à ce qu'à chaque commande, il adresse aux postes concernés les ordres relatifs aux tâches à accomplir, et
- l'ensemble des tâches relationnelles convergent, au moins médiatement, vers le poste de travail (38) chargé de la dernière des tâches à effectuer.

2. Système selon la revendication 1, **caractérisé en ce que** l'un, au moins, des postes de travail (40) est un poste de secours vers lequel convergent les informations lorsqu'un ordre ne peut être exécuté comme prévu, et agencé de manière à ce qu'un opérateur puisse y introduire des ordres et des informations complémentaires permettant de gérer ledit ordre.

3. Système selon l'une des revendications 1 et 2, **caractérisé en ce que** ladite mémoire (12) dispose de plusieurs listes alternatives pour une partie au moins des objets traités.

4. Système selon l'une des revendications 1 à 3,**caractérisé en ce que** l'ordinateur d'entrée est relié à un réseau Internet ou Intranet (14).
